# EUROPEAN PATENT APPLICATION

(11) **EP 2 672 706 A1**
(43) Date of publication of application: **11.12.2013**
(21) Application number: 13171094.9
(22) Date of filing: 07.06.2013
(51) Int. Cl.: H04N 7/26, H04N 7/32

(54) **Image encoding apparatus**

(30) Priority: 07.06.2012 JP 2012130190
(71) Applicant: CANON KABUSHIKI KAISHA, Ohta-ku Tokyo 146-8501 (JP)
(72) Inventor: Nakayama, Tadayoshi, Ohta-ku, Tokyo (JP)
(74) Representative: Foxon, Rachel Siobhan

(57) **Abstract**

The invention significantly decreases the number of buffers for an encoding delay and a data delay without lowering the prediction performance in predication encoding. To this end, a frame, at the same time, of a right neighboring camera is referred to, and the encoding timing of a reference destination image is delayed by an encoding time of several blocks with respect to a reference source image.

## Description

### BACKGROUND OF THE INVENTION

### Field of the Invention

The present invention relates to an image encoding apparatus for encoding images obtained at a plurality of viewpoints.

### Description of the Related Art

In recent years, a three-dimensional video content captured by a twin lens camera has become widespread. There is known H.264 Multi View Coding (to be referred to as H.264 MVC hereinafter) as a technique of compression-encoding a captured multi-viewpoint video. H.264 MVC is an extension of an encoding method complying with H.264, and is used as a 3D standard for Blu-ray Disc. In H.264 MVC, in addition to "interframe prediction encoding" using prediction between frames captured at the same viewpoint at different times, "inter-viewpoint prediction encoding" using prediction between viewpoints at the same time is possible. To perform inter-viewpoint prediction encoding, local decoding of a reference image at a viewpoint as a reference source needs to be complete. Since local decoding processing requires a given time, a delay occurs when performing inter-viewpoint prediction encoding.

Japanese Patent Laid-Open No. 2009-505607 discloses a method of interleaving images obtained by cameras at respective viewpoints using various units, and encoding them as one image stream.

Japanese Patent Laid-Open No. 2008-182669 discloses a technique of adopting a picture-camera prediction structure with a smallest code amount based on the correlation between a neighboring frame and a compensated frame, and minimizing the information amount in multi-viewpoint video encoding.

Japanese Patent Laid-Open No. 2008-182669 also discloses a method of calculating as a delay time a decoding start time difference necessary between viewpoints, and notifying the decoding side of it in order to refer to a reference region without failure when parallelly decoding images at respective viewpoints.

To search for a reference position vector from an image as an inter-viewpoint prediction reference source with high accuracy in encoding a multi-viewpoint image in real time, a sufficiently wide reference region is necessary. To this end, it is necessary to delay image data to be encoded by one frame or several ten lines, resulting in an increase in encoding delay and cost.

To decrease the number of buffers for temporarily saving the image of a reference region for inter-viewpoint prediction and to shorten a delay time due to this processing, the reference region is limited, thereby significantly decreasing the efficiency in compression-encoding.

In reference to this problem, Japanese Patent Laid-Open No. 2008-182669 places highest priority to (on) decreasing the code amount, but does not consider shortening the encoding delay. Furthermore, Japanese Patent Laid-Open No. 2008-182669 attempts to prevent an unnecessary delay by notifying the decoding side of a shortest delay that does not lead to a failure, but does not provide an arrangement in which the delay amount is decreased using the correlation between videos at viewpoints.

### SUMMARY OF THE INVENTION

The present invention has been made to overcome the conventional drawbacks.

The present invention in its first aspect provides an image encoding apparatus as specified in one of claims 1 to 3.

According to the present invention, it is possible to significantly decrease the number of buffers for an encoding delay and a data delay without lowering the prediction performance in prediction encoding.

Further features of the present invention will become apparent from the following description of exemplary embodiments (with reference to the attached drawings).

### BRIEF DESCRIPTION OF THE DRAWINGS

Fig. 1 is a view showing a case in which images of an object at an infinite distance, obtained by cameras at two viewpoints are identical;

Fig. 2 is a view showing a virtual region at an infinite distance, which has been divided into blocks as encoding units;

Figs. 3A and 3B are views each showing the relationship between the encoding timings of a block at the same position;

Figs. 4A and 4B are views each showing the relationship between the movement of the object toward the cameras and moving directions on images;

Fig. 5 is a block diagram showing the arrangement of a multi-viewpoint image encoding apparatus according to the first embodiment of the present invention;

Fig. 6 is a view showing a case in which a near object interferes to generate blind spots of cameras at a far distance; and

Fig. 7 is a block diagram showing the arrangement of a multi-viewpoint image encoding apparatus according to the second embodiment of the present invention.

### DESCRIPTION OF THE EMBODIMENTS

Embodiments of the present invention will be described in detail below with reference to the accompanying drawings.

General moving image encoding with one viewpoint includes three, so-called I, P, and B prediction modes. Among these modes, B-mode prediction refers to a temporally future frame, resulting in a long encoding delay of several frames.

This embodiment has as its object to encode a multi-viewpoint image with a small delay. Assume, therefore, that an image at a reference viewpoint is encoded using only I-mode prediction and P-mode prediction without using B-mode prediction at all. The usual P-mode prediction will be referred to as intra-viewpoint P-mode prediction, and a prediction mode in which frames at different viewpoints at the same time are referred to in one direction will be referred to as inter-viewpoint P-mode prediction. To reduce an encoding delay, images at viewpoints other than the reference viewpoint in the multi-viewpoint image encoding apparatus according to the present invention undergo prediction encoding using inter-viewpoint P-mode prediction, intra-viewpoint P-mode prediction, and I-mode prediction.

To capture and encode a multi-viewpoint image, there are two problems which do not arise in single-viewpoint image capturing. One problem is which of a plurality of viewpoints is set as a reference viewpoint. The other problem is the relationship between a viewpoint as a reference source and that as a reference destination. In consideration of these two points, two embodiments will be described below.

### [First Embodiment]

The first embodiment has as its object to shorten an encoding delay. A camera arranged at the rightmost position with respect to an object is set as an image capturing apparatus at a reference viewpoint, and an encoded image of the right one of two neighboring cameras is referred to when encoding an image of the left camera. Assume that an image is encoded by one block formed by a plurality of pixels in the raster-scanning order.

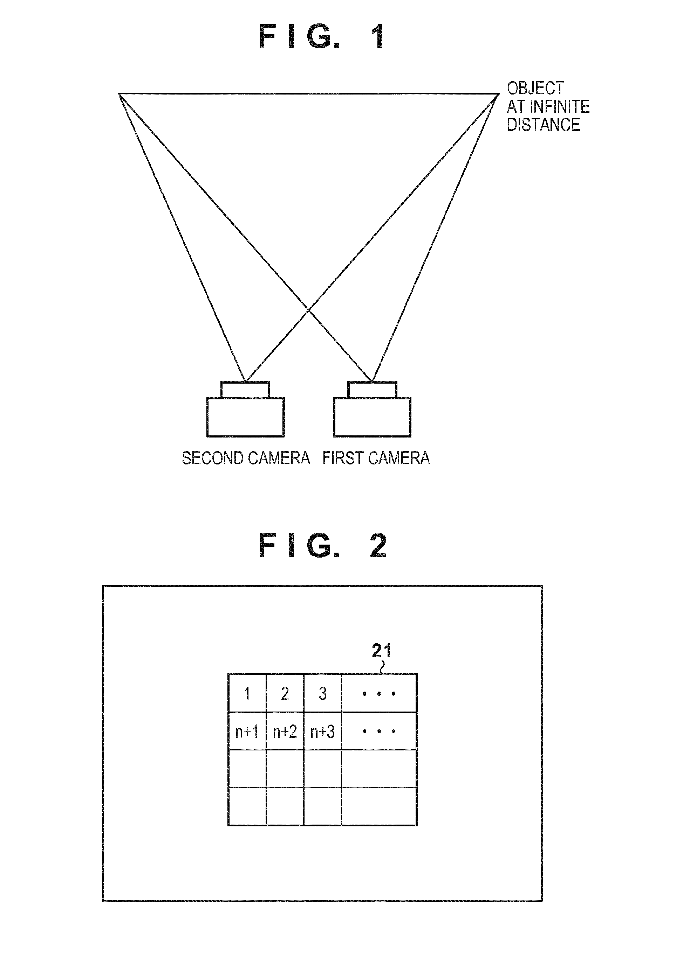

The reason why it is rational to refer to an image of the right one of two neighboring cameras will be described with reference to Fig. 1. Assume that the two cameras are arranged to have the same composition and angle of view with respect to an object at an infinite distance. In other words, the cameras are arranged so that their central axes are parallel to each other to capture a single object at the same angle of view.

The right camera will be referred to as a first camera, the left camera will be referred to as a second camera, encoders for encoding images of the cameras will be referred to as first and second encoders, respectively. Assume that the cameras respectively capture a virtual object at an infinite distance at the same angle of view in the above-described arrangement (Fig. 2), and a region 21 within the captured image is encoded on a block basis.

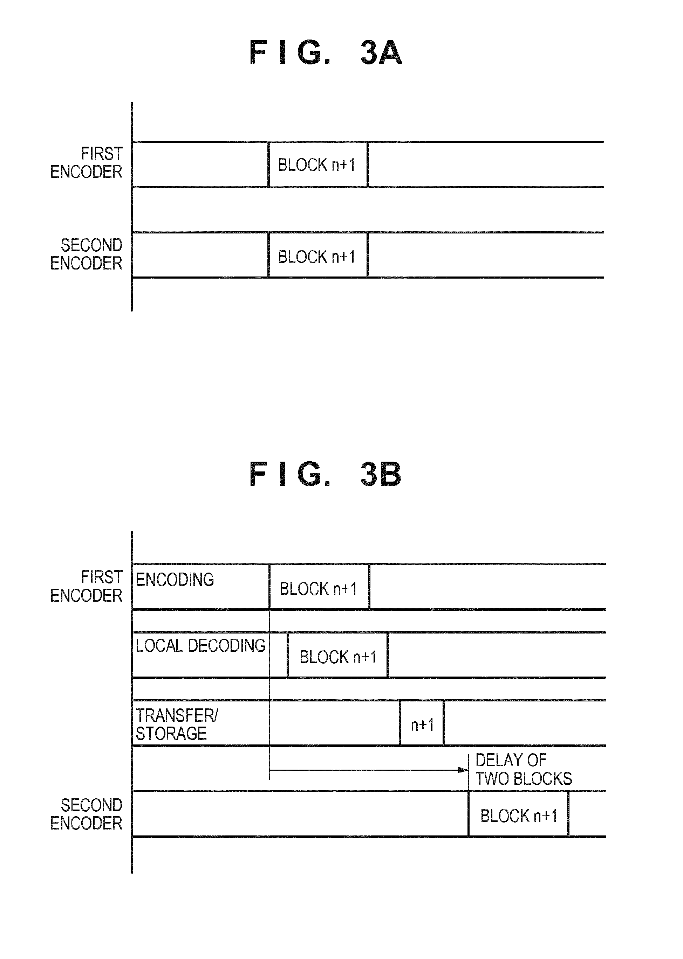

If the first and second cameras capture an image capturing target at an infinite distance, the obtained images are completely identical. If, therefore, the first and second encoders start encoding at the same time, they encode a block (n+1) within the region 21 at almost the same timing, as shown in Fig. 3A. In this case, it is impossible to refer to a block (region) effective in performing prediction processing for a block to be encoded by the second encoder.

To solve this problem, the encoding timing of the second encoder is delayed until the first encoder performs local decoding for the pixel block of interest and transfers it to the second encoder, and then the second encoder can refer to the decoded data. Fig. 3B shows the timing chart. If the first encoder can perform local decoding and transfer decoded data at timings shown in Fig. 3B, it is only necessary to delay the encoding timing by an encoding time of two blocks.

During the delay time, the second encoder needs to hold extra data, which requires an extra buffer capacity. The capacity, however, corresponds to only two blocks. This enables the second encoder to refer to the local decoded block data of the first encoder at the same position as that of the block to be encoded, thereby allowing effective inter-viewpoint prediction in the entire region of the image.

The virtual object at the infinite distance has been explained above.

An actual distance to an object is shorter than the infinite distance, as a matter of course. When the object comes close to the cameras, the positions of the object in the images at the respective viewpoints move in the opposite directions.

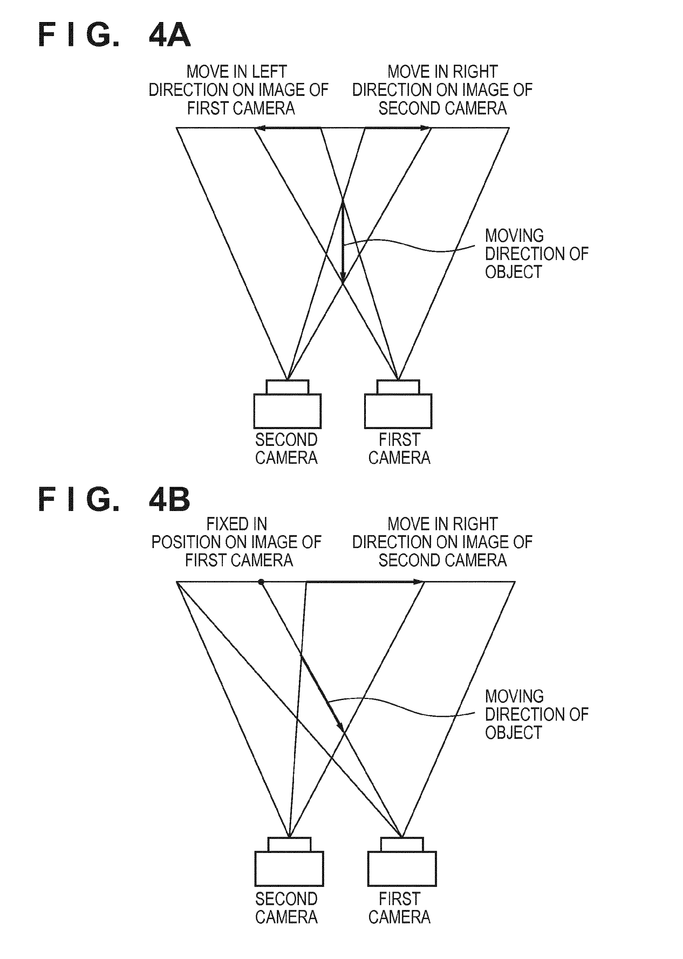

More specifically, as shown in Fig. 4A, when the object comes close to the two cameras, it moves in the left direction on the captured image of the first camera, and moves in the right direction on the captured image of the second camera. On the other hand, as shown in Fig. 4B, if the object does not move and is fixed in position on the captured image of the first camera even when it comes close to the two cameras, it largely moves in the right direction on the captured image of the second camera.

This relationship is convenient for pixel block prediction. This is because a region to be referred to for inter-viewpoint prediction is precedingly encoded on the right neighboring camera side as the distance to the object is shorter. The reason for this is that a block to be encoded is changed in the raster-scanning order.

Most strict conditions are imposed when performing inter-viewpoint prediction for the object at the infinite distance and referring to the object as described above. If, therefore, a delay time of the encoding start timing of the second encoder is set to be able to refer to the object in that case, no problem arises in other cases.

The reference relationship between the neighboring cameras, and the operation timings of the encoders have been described. If this reference relationship is applied to a multi-viewpoint image capturing system in which three or more cameras are horizontally arranged in a line, a camera arranged at the rightmost position with respect to the object (the leftmost position when seen from the object side) naturally serves as a reference viewpoint.

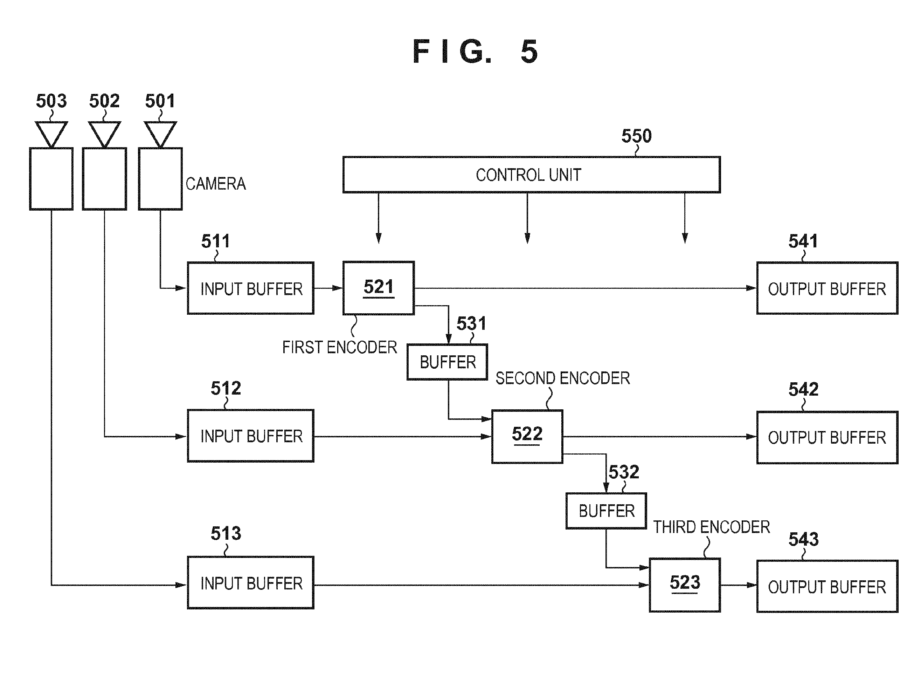

In consideration of the above description, Fig. 5 shows the arrangement of a multi-viewpoint image encoding apparatus in which three cameras are horizontally arranged in a line, and components and their operations will be explained below.

Referring to Fig. 5, reference numerals 501, 502, and 503 respectively denote first, second, and third cameras for capturing a multi-viewpoint image to be encoded. The first camera 501 serves as a reference viewpoint. As shown in Fig. 5, the second camera 502 is on the left side of the first camera 501. The third camera 503 is on the left side of the second camera 502.

Reference numerals 511, 512, and 513 denote input buffers each for temporarily holding image data to form block data appropriate for encoding of image data sent from a corresponding camera in the raster-scanning order; 521, 522, and 523, first, second, and third encoders each for encoding an image from a corresponding camera; 531 and 532, reference buffers each for temporarily storing image data of a reference region for inter-viewpoint prediction; and 541, 542, and 543, output buffers each for storing codes output from a corresponding one of the three encoders.

Reference numeral 550 denotes a control unit for controlling the operation timings of the three encoding units and controlling the whole encoding apparatus.

The first to third cameras capture images at the same time in synchronism with each other. Three frames captured at the same time have slightly different viewpoints but provide three still images. Data of the images captured by the respective cameras are sent to the input buffers 511 to 513, respectively.

When the input buffer 511 accumulates data enough to form an 8 × 8 or 16 × 16 pixel block, it extracts block data, and sends it to the first encoder 521. Upon receiving the block data, the first encoder 521 performs I-mode prediction or intra-viewpoint P-mode prediction to encode the block data. The generated encoded data is then sent to and temporarily stored in the output buffer 541.

On the other hand, since the block encoded by the first encoder 521 is referred to in I- or P-mode prediction in the same encoder, a local decoded image is held for a period of time of one frame. At the same time, the local decoded image is also transferred to and stored in the reference buffer 531 so that the second encoder 522 can refer to the image in inter-viewpoint P-mode prediction.

As shown in the timing chart of Fig. 3B, to refer to the block data at the same position within the image in inter-viewpoint prediction, the encoder which is to refer to the image needs to stand by for an encoding time of about two blocks.

The second encoder 522 starts encoding an encoding time of two blocks after encoding by the first encoder. Furthermore, the start of transfer of the block data from the input buffer 512 to the second encoder is also delayed by the encoding time.

The third encoder 523 starts encoding an encoding time of two blocks after encoding by the second encoder. Similarly, the start of transfer of the block data from the input buffer 513 to the third encoder is also delayed by the encoding time.

The image data local decoded by the second encoder is transferred to and stored in the reference buffer 532 so that the third encoder can refer to it in inter-viewpoint P-mode prediction. The encoded data generated by the second and third encoders are respectively sent to and temporarily stored in the output buffers 542 and 543, similarly to the encoded data generated by the first encoder.

The encoded data stored in the output buffers 541 to 543 may be transferred somewhere else and decoded, or may be recorded in a storage media and saved for a long period of time.

The control unit 550 controls the encoding timings of the first to third encoders 521 to 523 described above, and also controls the input/output timings of the buffers 511 to 513, 531, 532, and 541 to 543.

As described above, according to the first embodiment, if pixel blocks are encoded in the raster-scanning order for each viewpoint, it is possible to implement a multi-viewpoint image encoding apparatus with a small delay without lowering the prediction performance in prediction encoding by referring to, in inter-viewpoint prediction, an image obtained by encoding/decoding a captured image of a right neighboring camera for an object.

### [Second Embodiment]

In the second embodiment, a plurality of inter-viewpoint P-mode prediction reference sources are provided.

More specifically, the captured image of the right neighboring camera as an inter-viewpoint P-mode prediction reference source in the above first embodiment is set as a first inter-viewpoint P-mode prediction reference source, and a captured image of a camera two cameras away on the right is set as a second inter-viewpoint P-mode prediction reference source.

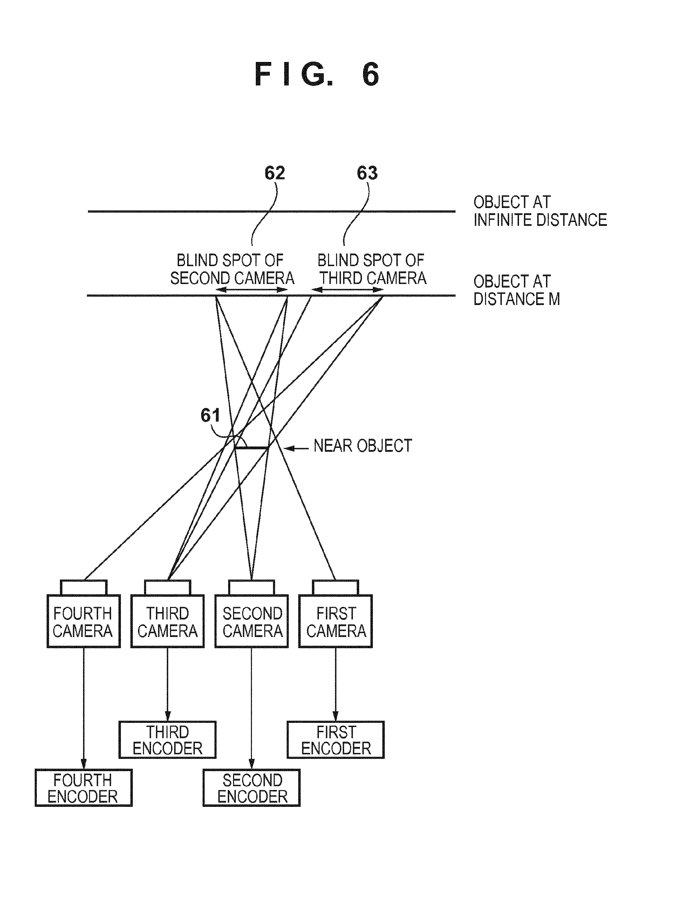

Even in a status as shown in Fig. 6 in which effective inter-viewpoint prediction is difficult in the first embodiment, it becomes possible to perform effective inter-viewpoint prediction by increasing the number of inter-viewpoint P-mode prediction reference sources to two. A description will be provided below with reference to Fig. 6.

Referring to Fig. 6, a near object 61 generates a region 62 that acts as a blind spot of a second camera on an object at a distance M, but first and third cameras can capture the region 62.

If the third encoder of the third camera encodes the region 62, it is useless to refer to a captured image of the right neighboring second camera. However, by referring to an image captured by the first camera two cameras away and encoded by a first encoder, it becomes possible to decrease the prediction residual of the encoded block, thereby achieving efficient encoding.

Similarly, the same near object 61 generates a region 63 that acts as a blind spot of the third camera, but the second and fourth cameras can capture the region 63.

To encode the region 63 by a fourth encoder, it is possible to realize efficient prediction/encoding by referring to an image captured by the second camera two cameras away and encoded by a second encoder. The second embodiment produces these improvement effects.

Note that Fig. 6 shows the near object 61 and regions 62 and 63 only in the horizontal direction. They actually have given heights, respectively, and two-dimensionally extend.

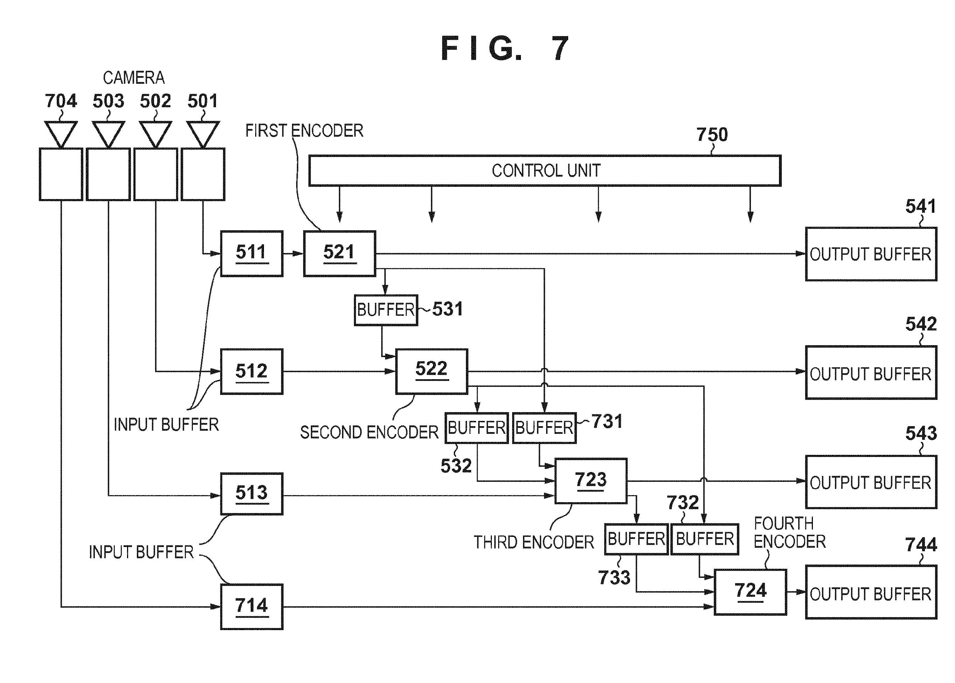

Fig. 7 shows a multi-viewpoint image encoding apparatus as an example of the second embodiment. An arrangement and operation timings are the same as those in the first embodiment except that the number of cameras increases from three to four and the number of inter-viewpoint prediction reference sources for the encoders of two left cameras increases to two. The different points will be mainly described.

Components having completely the same functions as those of the components of the multi-viewpoint image encoding apparatus according to the first embodiment shown in Fig. 5 have the same reference numerals. More specifically, the components having reference numerals starting with 5 are the same as those in the first embodiment. Components newly added in Fig. 7 and components having functions slightly different from those of the components shown in Fig. 5 will be explained below.

Reference numeral 704 denotes a fourth camera; 714, an input buffer for temporarily holding image data of the fourth camera; 723, a third encoder for which the number of inter-viewpoint prediction reference sources increases to two; 724, a fourth encoder for encoding an image captured by the fourth camera; 731, 732, and 733, reference buffers each for temporarily storing image data of an inter-viewpoint prediction reference region; 744, an output buffer for storing each code output from the fourth encoder; and 750, a control unit for controlling the four encoders 521, 522, 723, and 724 and the whole encoding apparatus.

A significant feature in the arrangement shown in Fig. 7 is that the reference buffers 731 and 732 are provided to use images of the two right cameras in inter-viewpoint prediction. If the two reference buffers are omitted from Fig. 7, the number of cameras simply increases from three in the first embodiment to four.

The above description completely represents different points between Figs. 7 and 5, and thus a further explanation of the arrangement shown in Fig. 7 is not necessary. Only a method of switching between selectable inter-viewpoint prediction operations in the third and fourth encoders needs to be described.

Inter-viewpoint prediction according to the first embodiment is based on reference to an image obtained by encoding/local decoding the image of a frame of the right neighboring camera at the same time. The same goes for the second embodiment.

If a region where a prediction error is smaller than a setting value can be found in the first reference image (reference frame) by an evaluation method similar to prediction error evaluation generally performed in a motion vector search, the found region is used for prediction. If no such region can be found (a prediction error is equal to or larger than the setting value), switching to a second reference image having a second highest priority level, that is, an image of a second camera on the right side is performed, thereby searching for such a region. If a region where a prediction error is smaller than the setting value cannot be found within the second reference image, the process transits to intra-viewpoint P-mode prediction in which a preceding frame at the same viewpoint is referred to. In this way, switching from inter-viewpoint prediction to intra-viewpoint prediction is performed.

Alternatively, since correlation between the images of neighboring blocks is relatively high, if the reference source of a block immediately above a block to be encoded and that of a block on the left side of the block to be encoded are both the second reference image, it is efficient to start prediction from the second reference image. If a region where a prediction error is smaller than the setting value is not found in the second reference image, prediction may be performed by returning to the above first reference image.

The second inter-viewpoint P-mode prediction reference source is not limited to the camera two cameras away on the right side, and those skilled in the art can readily extend to a camera three or more cameras away. It is also possible to increase the number of inter-viewpoint prediction reference sources to three or more.

As described above, the multi-viewpoint image encoding apparatus according to the first or second embodiment can implement encoding with a small delay without lowering the prediction performance in prediction encoding by setting the inter-viewpoint prediction reference source to an image obtained by encoding the captured image of the right neighboring camera.

Note that although the number of cameras serving as image capturing means is three in the first embodiment and four in the second embodiment, these numbers are merely examples. That is, if the cameras are generally represented by N image capturing means, the following arrangement need only be provided. That is, there is provided
an image encoding apparatus for encoding a multi-viewpoint image, comprising
N encoding means for raster-scanning respective blocks, each formed by a plurality of pixels, from the upper left position of a captured frame in the lower right direction, and generating encoded data for each block, and
one-dimensional array of N image capturing means which respectively correspond to the N encoding means and are arranged so that a direction of the one-dimensional array corresponds to one line in the raster-scanning,
wherein if the N image capturing means are defined as first, second, ..., and Nth image capturing means in order from the right end to the left end in the one-dimensional array direction, and
the N encoding means are defined as first, second, ..., and Nth encoding means to respectively correspond to the first, second, ..., and Nth image capturing means,
ith (i > 1) encoding means comprises
means for referring to, in inter-viewpoint prediction, a frame obtained at the same time by at least one image capturing means positioned on the right side of an ith image capturing means, and
delay means for delaying a frame from the ith image capturing means by a time required for inter-viewpoint prediction.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

An embodiment of the present invention provides, wherein the reference numbers are exemplary and non-limiting, an encoding apparatus for encoding a multi-viewpoint image, comprising:
a horizontal one-dimensional array of N image capturing units arranged to simultaneously capture respective image frames said image frames comprising a plurality of blocks formed by a plurality of pixels,
N encoders, each arranged to receive image data from a respective image capturing unit, wherein each encoder is arranged to generate encoded data of each image, received from its respective image capturing unit, block by block in a raster-scan order, starting from an upper left position of the captured frame and finishing in a lower right position; and
wherein said N image capturing units are defined as first to Nth image capturing units in sequence from a right end to a left end of the one-dimensional array direction, when viewed from behind the N image capturing units, and
said N encoders are defined as first to Nth encoders to respectively correspond to the first to Nth image capturing units,
wherein an ith (i > 1) encoder (522) of the N encoders corresponds to an ith image capturing unit, and wherein
said ith encoder is configured to refer to, in inter-viewpoint prediction, a block from a frame captured by an image capturing unit positioned on the right side of the ith image capturing unit and to refer to a correspondingly positioned block from a frame captured by the ith image capturing unit, wherein the frames are captured simultaneously by the ith image capturing unit and the image capturing unit positioned on the right side of the ith image capturing unit, and
a delay unit (550) which delays transfer of data, of the correspondingly positioned block, to the ith encoder by a time period corresponding to the time required to encode two blocks.
Preferably the ith encoder is configured to refer to, in the inter-viewpoint prediction, a plurality of frames obtained from a respective plurality of image capturing units positioned on the right side of the ith image capturing unit.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image encoding apparatus for encoding a multi-viewpoint image, **characterized by** comprising:
N encoders which raster-scan respective blocks, each formed by a plurality of pixels, from an upper left position of a captured frame in a lower right direction, and generates encoded data for each block; and
a one-dimensional array of N image capturing units which respectively correspond to said N encoders and are arranged so that a direction of the one-dimensional array corresponds to one line in the raster-scanning,
wherein if said N image capturing units are defined as first, second, ..., and Nth image capturing units in order from a right end to a left end in the one-dimensional array direction, and
said N encoders are defined as first, second, ..., and Nth encoders to respectively correspond to the first, second, ..., and Nth image capturing units,
an ith (i > 1 ≤ N) encoder comprises
a reference unit which refers to, in inter-viewpoint prediction, a frame obtained at the same time by at least one image capturing unit positioned on the right side of an ith image capturing unit, and
a delay unit which delays a frame from the ith image capturing unit by a time required for inter-viewpoint prediction.

2. The apparatus according to claim 1, wherein the ith encoder
preferentially encodes an encoded image encoded by an (i-1)th encoder corresponding to an (i-1)th image capturing unit positioned on the right side of the ith image capturing unit, and
encodes, as a reference source, if a prediction error is not smaller than a preset value, one of an encoded image of a frame from an (i-2)th image capturing unit positioned on the right side and an encoded image of a preceding frame captured by the ith image capturing unit.

3. The apparatus according to claim 2, wherein the ith encoder performs
if an error of a motion vector found within the frame from the (i-2)th image capturing unit is smaller than the preset value, encoding based on inter-viewpoint prediction for the frame from the (i-2)th image capturing unit, and
if the error of the motion vector found within the frame from the (i-2)th image capturing unit is not smaller than the value, encoding based on intra-viewpoint prediction in which encoding is performed using, as a reference source, the encoded image of the preceding frame captured by the ith image capturing unit.
